# EUROPÄISCHE PATENTSCHRIFT

(11) **EP 0 937 531 B1**
(45) Veröffentlichungstag und Bekanntmachung des Hinweises auf die Patenterteilung: **31.03.2004**
(21) Anmeldenummer: 98123984.1
(22) Anmeldetag: 17.12.1998
(51) Int. Cl.: B23K 20/12

(54) **Reibschweissverfahren zur Beschaufelung eines Rotors für eine Strömungsmaschine**
Friction welding method for fixing blades onto a rotor of a steam machine
Procédé de soudage par friction pour l'aubage d'un rotor d'une machine à vapeur

(30) Priorität: 23.02.1998 DE 19807637
(43) Veröffentlichungstag der Anmeldung: 25.08.1999
(73) Patentinhaber: MTU Aero Engines GmbH, 80995 München (DE)
(72) Erfinder: Schneefeld, Dieter, 85253 Walkertshofen (DE); Wilhelm, Hans Dr., 80997 München (DE); Helm, Dietmar Dr., 85757 Karlsfeld (DE); Thaler, Erich, 85221 Dachau (DE)
(74) Vertreter: Einsele, Rolf W.

(56) Entgegenhaltungen:
- EP-A- 0 445 035
- EP-A- 0 669 183
- DE-A- 19 630 703
- US-A- 5 319 179

## Beschreibung

Die Erfindung betrifft ein Reibschweißverfahren zur Beschaufelung eines Rotors für eine Strömungsmaschine, bei dem an einer Umfangsfläche eines Trägers mehrere längliche Schweißflächen vorgesehen werden, die jeweils mit einer Schweißfläche einer Schaufel unter Durchlaufen einer Reib- und Stauchphase verschweißt werden, wobei die Schweißtemperatur durch Zusammenpressen der Schweißflächen und eine oszillierende Relativbewegung zwischen der Schaufel und dem Träger in der Schweißebene erzeugt wird.

Derartige Reibschweißverfahren werden zum Beschaufeln von Trägern, wie z.B. von Scheiben (Blisk) für Gasturbinen, eingesetzt. Die Träger weisen im allgemeinen eine zumindest teilweise konisch ausgebildete Umfangsfläche auf. An der Umfangsfläche des Trägers können mehrere gleichmäßig voneinander beabstandete, vorstehende Höcker vorgesehen werden, an deren Stirnseite Schweißflächen ausgebildet sind, an welche jeweils eine Schaufel unter Bildung eines integralen Bauteils geschweißt wird. Die Schweißflächen des Trägers und der Schaufel werden dabei zur Erzeugung der notwendigen Schweißtemperatur mittels einer Stauchkraft zusammengepreßt, so daß die Fügezone bzw. Schweißebene während der oszillierenden/linearen Relativbewegung der Schaufel gegenüber dem Träger bis zur Schweißtemperatur aufgeheizt wird. Bei Erreichen der Schweißtemperatur tritt eine Stauchung (axiale Längenverkürzung) in den zu fügenden Teilen auf (Reib-und Stauchphase).

Zur Erzielung guter Fügequalitäten soll die Stauchung auf beide Teile verteilt werden, wobei je nach Anwendung gleich große oder auch voneinander abweichende Stauchanteile für den Höcker des Trägers einerseits und die Schaufel andererseits angestrebt werden. Die Stauchanteile können jedoch durch unterschiedliche Warmfestigkeiten der beteiligten Werkstoffe oder/und unterschiedliche Wärmeableitungsverhältnisse infolge verschiedener Bauteilgeometrien, die zu unterschiedlichen Temperaturprofilen in der Umgebung der Schweißebene führen, zum Teil stark differieren.

Beim Reibschweißen sog. Blisk für Strahltriebwerke werden zwar im allgemeinen sowohl für den Träger als auch für die Schaufel Ti-Werkstoffe eingesetzt, jedoch können die beiden Teile voneinander abweichende Geometrien aufweisen, z.B. durch einen für eine Spannvorrichtung erforderlichen, quaderförmig ausgebildeten Bund am Schaufelfuß. Hierdurch treten unterschiedliche Wärmeableitungsverhältnisse und damit unterschiedliche Temperaturprofile in der Schweißzonenumgebung auf, die zu den stark voneinander abweichenden Stauchanteilen führen können. Wenn ein Stauchanteil zu gering ist und damit verbunden entsprechend wenig Schweißwulst während des Schweißvorgangs herausgerieben wird, können Verunreinigungen, sauerstoffreiche Einschlüsse od.dgl. in der Schweißzone verbleiben und zu schlechten Fügequalitäten führen.

Im Hinblick auf die Fügequalität besteht ein Problem auch darin, daß bei der Abkühlung nach Beendigung der Reib- und Stauchphase des Schweißvorgangs in der Schweißzone infolge unterschiedlicher Volumen-/Oberflächenverhältnisse in der Umgebung der Schweißzone stark voneinander abweichende Temperaturprofile auftreten, die zu ungünstigen Spannungen oder Randfehlern in der Fügezone führen und die Fügequalität herabsetzen können. Die unterschiedlichen Volumen/Oberflächenverhältnisse resultieren aus der im Querschnitt länglichen und im Bereich der Vorder- und Hinterkante der Schaufel vergleichsweise spitz zulaufenden Schweißfläche, wodurch im Kantenbereich im Vergleich zum Mittenbereich kleine Werkstoffvolumina von großen Oberflächen umschlossen sind.

Aus der EP 0 376 874 ist ein Verfahren zum Ersetzen einer Laufschaufel an einem integral beschaufelten Rotor sowie ein Verfahren zu dessen Herstellung bekannt, wobei jeweils eine Schaufel auf einen vorstehenden Stumpf einer (Rotor-)Scheibe geschweißt wird, in dem die Schaufel gegen den Stumpf gedrückt wird und das Verbinden durch Erhitzen der Verbindungsstelle zwischen dem Stumpf und der Schaufel auf eine Temperatur erfolgt, die Erweichung, Metallfluß und Verbinden bewirkt und im Bereich von 1038° C bis 1149° C liegen soll. Eine zusätzliche Erwärmung zur Verbesserung der Fügequalität und zur Vermeidung von Fehlstellen in Schweißzone wird nicht behandelt.

Aus der EP-A-0 669 183, welche als nächstkommender Stand der Technik angesehen wird, ist ein Verfahren zum Verschweißen von Schaufelteilen bekannt, bei dem zumindest im Bereich der Schaufelein- und -austrittskanten durch flanschartige Aufdickungen eine bessere und gleichmäßigere Aufheizung der Schweißzone erreicht werden soll. Bevorzugtes Schweißverfahren ist hier das lineare Reibschweißen, neben z. B. Widerstandsschweißen und Schmelzpressschweißen.

Die DE 695 00 234 T2 offenbart ein Verfahren zum Schweißen zweier Schaufelteile, insbesondere einer Schaufel und dem Stutzen einer Scheibe, welche zur Verbesserung der Schweißqualität bei der Neuteilfertigung an der Vorder- und Hinterkante der Schaufel mit einer Überdicke ausgebildet sind. Da der Stutzen bei einer Reparatur bereits das Maß des Endprodukts hat, wird die Schweißzone bei der Reparatur anstelle der Überdicke mit einem Kragen, wie einem Plättchen, vergrößert. Der Kragen kann zwischen die Flächen gelegt werden öder um diese herum verlaufen und wird während des Schweißens auf Schweißtemperatur erwärmt und schmelzflüssig, so dass seine Rückstände abschließend entfernt werden müssen. Nachteilig dabei ist, dass zusätzliches Material erforderlich ist, das zu dem an jenes der Schaufelteile angepasst werden muss. Darüber hinaus muss der Kragen an die Form der Schweißzone unter deren Modifikation angepasst und, da er kein integraler Bestandteil ist, vor dem Schweißen an diese angesetzt werden.

Die Aufgabe der Erfindung besteht darin, ein Verfahren zur Beschaufelung eines Rotors für eine Strömungsmaschine der eingangs beschriebenen Gattung zu schaffen, bei dem die Fügequalität in der Schweißzone auf möglichst effektive Weise verbessert wird.

Die Lösung der Aufgabe besteht erfindungsgemäß darin, dass wenigstens die Schaufel oder der Träger im Bereich der Schweißfläche in dem Maße auf eine unterhalb der Schweißtemperatur liegende Temperatur zusätzlich erwärmt wird, dass an der Schaufel und am Träger ein ausreichender, definierter Stauchanteil erzielt wird, wo bei dieses bevorzugt vor und/oder während sowie bedarfsweise noch nach der Reib-und Stauchphase erfolgen kann.

Der Vorteil des erfindungsgemäßen Verfahrens besteht darin, dass durch die örtliche, zusätzliche Erwärmung die Fügequalität in der Schweißzone wirksam verbessert wird. Je nach Anwendungsfall wird lediglich eines der zu fügenden Teile oder auch beide zusätzlich erwärmt. Das Verfahren läßt sich sowohl zur Neuteilherstellung als auch zur Reparatur von beschaufelten Rotoren einsetzen. In einer bevorzugten Ausgestaltung wird wenigstens im Bereich der Schaufelvorderkante und der Schaufelhinterkante zusätzlich erwärmt, da hierdurch die Temperaturverhältnisse im Bereich der Schweißzone an vergleichsweise kritischen Stellen auf jeden Fall beeinflußt werden und bspw. die Abkühlung im Bereich der Schaufelvorder- und Schaufelhinterkante, wo im Vergleich zum Mittenbereich verhältnismäßig kleine Werkstoffvolumina von großen Oberflächen umschlossen sind, unter Verbe s-serung der Fügequalität gesteuert werden kann.

Es ist zweckmäßig, daß sowohl die Schaufel als auch der Träger in der Schweißzonenumgebung erwärmt werden, wobei bevorzugt die Schweißzonenumgebung um den gesamten Umfang der Schaufel bzw. des Höckers herum, d.h. auch im Mittenbereich erwärmt wird.

Bevorzugt wird die Temperatur in der Abkühlphase nach Abschluß der Reib- und Stauchphase zwischen 4 bis 6 min. gehalten. Mit einer zusätzlichen Erwärmung di e-ser verhältnismäßig kurzen Dauer läßt sich die Abkühlung verfahrenstechnisch effizient in der Weise beeinflussen, daß die Fügequalität in der Schweißebene verbessert und nahezu keine Randfehler, wie Kerben, in der Schweißzone auftreten.

Es kann zweckmäßig sein, daß die Schweißfläche und der sich daran angrenzende Bereich der Schaufel vor und ggf. während der Reib- und Stauchphase auf eine unterhalb der Schweißtemperatur liegende Temperatur vorerwärmt wird. Durch diese (örtliche) Zusatzenergie läßt sich der schaufelseitige Stauchanteil steuern, so daß gewährleistet ist, daß mit dem von der Schaufelseite resultierenden Schweißwulst Verunreinigungen od. dgl. herausgerieben werden und die Fügequalität verbessert wird. Diese Maßnahme erweist sich als besonders vorteilhaft, wenn der Träger und die Schaufel aus unterschiedlichen Werkstoffen hergestellt sind und der Schaufe l-werkstoff eine höhere Warmfestigkeit aufweist.

Es hat sich gezeigt, daß mit einer Erwärmung auf eine Temperatur zwischen 250° C und 700° C, die mithin deutlich unterhalb der Schweißtemperatur liegt, eine wir k-same Beeinflussung der Fügequalität erzielen läßt. Eine solche verhältnismäßig nie d-rige Temperatur hat sich als ausreichend erwiesen, um bspw. infolge von Spannu n-gen in der Schweißzone auftretenden Randfehler, wie z.B Kerben, nahezu vollständig verhindern zu können. Auch hat sich dieser Temperatur zur Vorwärmung der schaufel- oder trägerseitigen Schweißflächen vor dem Schweißvorgang als geeignet g e-zeigt, um eine verbesserte Fügequalität zu gewährleisten und ein Steuern der Stauchanteile zu ermöglichen.

Es ist zweckmäßig, daß für die Erwärmung Schutzgas, das zur Vermeidung von Ox i-dation an freigelegten Teilen der Schweißflächen eingesetzt werden kann, aufgeheizt wird und die Schweißzone im zu erwärmenden Bereich, z.B. im Bereich der Schaufelvorder- und Schaufelhinterkante oder alternativ um den gesamten Umfang der Schaufel herum, umströmt.

Je nach Anwendungsfall kann es vorteilhaft sein, daß ein flüssiges Medium aufgeheizt wird und den zu erwärmenden Bereich umströmt.

Es kann zweckmäßig sein, die Erwärmung induktiv durchzuführen. Eine solche Erwärmung eignet sich bspw. für das Vorwärmen der Schweißfläche der Schaufel und ggf. des sich daran angrenzenden Bereichs der Schaufel, die bevorzugt im Minute n-bereich erfolgen kann. Die induktive Erwärmung läßt sich ohne weiteres auch für die Vorerwärmung der Schweißfläche des Trägers oder das nach Abschluß der Reib- und Stauchphase erfolgende Nachwärmen einsetzen.

Alternativ kann die Wärme mit einer zusätzlichen Wärmequelle auch durch eine E r-wärmung mittels Strahlung oder Widerstandsbeheizung erfolgen.

Bevorzugt werden die trägerseitigen Schweißflächen jeweils an einem über die U m-fangsfläche des Trägers vorstehenden Höcker stirnseitig ausgebildet und der Höcker auf eine unterhalb der Schweißtemperatur liegende Temperatur zusätzlich e rwärmt.

Weitere Ausgestaltungen der Erfindung sind in den Unteransprüchen beschrieben.

Im folgenden wird die Erfindung anhand von Ausführungsbeispielen unter Bezu g-nahme auf eine Zeichnung näher erläutert. Es zeigt:
- Fig. 1: eine Teilansicht einer beschaufelten (Träger-)Scheibe für eine Strömungsmaschine mit angesetzten Schutzgasduschen und
- Fig. 2: eine Ansicht der beschaufelten (Träger-)Scheibe gemäß Schnitt I-I aus Fig. 1.

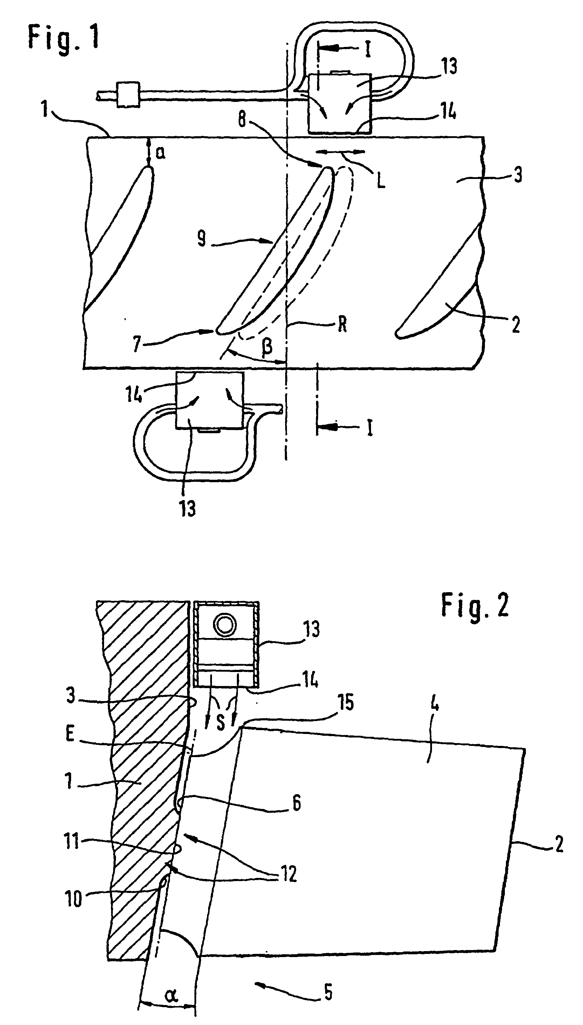

In Fig. 1 und Fig. 2 ist ein Laufrad eines Strahltriebwerks als Beispiel für einen beschaufelten Träger für eine Strömungsmaschine dargestellt. Das Laufrad besteht aus einem als Scheibe (Blisk) ausgebildeten Träger 1, an dessen Umfangsfläche 3 eine Vielzahl gleicher Schaufeln 2 angebracht ist. Der Träger 1 und die Schaufeln 2 sind aus einer Ti-Legierung gefertigt und bilden ein integrales Bauteil. Alternativ läßt sich das erfindungsgemäße Verfahren auch dann anwenden, wenn der Träger 1 und die Schaufel 2 aus verschiedenen Werkstoffen bestehen.

Bei der Neuteilfertigung werden zunächst die Schaufeln 2 bzw. die im Bereich der Schweißfläche mit Aufmaß versehenen Schaufeln 2 an den Träger 1 reibgeschweißt. Anschließend wird an dem Schweißzonenbereich eine (spanabhebende) Fertigbearbeitunng durchgeführt, bei der Werkstoff abgetragen wird, um den Schweißwulst zu entfernen und den Schaufeln 2 sowie über die Umfangsfläche 3 des Trägers 1 vo r-stehenden Höckern 10 unter Berücksichtigung von Aerodynamik- und Festigkeitsaspekten die endgültige Form zu geben. Bei der Reparatur wird zunächst eine zu ersetzende Schaufel abgetrennt und dann der Schweißvorgang entsprechend durc h-geführt.

Wie auch in Fig. 2, in der die Schaufel 2 in die Schnittebene projiziert ist, zu erke n-nen, besteht eine übliche Schaufel 2 aus einem Schaufelblatt 4 und einem Schaufe l-fuß 5, der im Rohteilzustand in eine ebene Schweißfläche 6 ausläuft, welche je nach Anwendung auch gekrümmt ausgebildet sein könnte. Das Schaufelblatt 4 weist im Querschnitt eine gekrümmte Form auf und ist in radialer Richtung relativ lang und dünn ausgebildet. In Fig. 1 ist zu erkennen, daß das Schaufelblatt 4 im Bereich der Schaufelvorderkante 7 und der Schaufelhinterkante 8 vergleichsweise eng zusa m-menläuft und deutlich schmaler als im Mittenbereich 9 ist.

Die Schweißfläche 6 weist im Grundriß eine ähnliche Kontur wie das Schaufelprofil auf und ist von einem unteren Endabschnitt 15 des Schaufelfußes 5 durch ein Rad i-en aufweisendes Podest um wenige mm (z.B. 2 - 8mm) beabstandet. Der Endabschnitt 15 des Schaufelfußes 5 kann z.B. mittels Reibschluß gegriffen werden, um beim Reibschweißen die Stauchkräfte auf die Schaufel 2 bzw. deren Schweißfläche 6 ebenso wie die oszillierende, lineare Relativbewegung aufzubringen.

Der im wesentlichen rotationssymmetrsich ausgebildete Träger 1 besitzt eine mit der Rotationsachse des Triebwerks zusammenfallende Rotationsachse R. Senkrecht zur Rotationsachse R weist der Träger 1 zwei im wesentlichen ebene, parallel zueinander verlaufende Stirnflächen auf, zwischen denen sich die Umfangsfläche 3 des Trägers erstreckt. Auf der Umfangsfläche 3 ist eine Vielzahl leicht vorstehender Höcker 10 ausgebildet, die unter einem Schaufelwinkel β zur Rotationsachse R ausgerichtet sind. Jeder Höcker 10 weist eine ebene Schweißfläche 11 auf, deren Kontur der Schweißfläche 6 der Schaufel 2 im wesentlichen entspricht und deren Größe geri n-ger sein kann. Alternativ könnte auch die Schweißfläche 11 entsprechend einer g e-krümmt ausgebildeten Schweißfläche 6 ebenfalls gekrümmt ausgebildet sein. In der Praxis haben die Träger 1 meist eine Umfangsfläche 3 mit einer wesentlichen kegelabschnittsförmigen Gestalt. Wie in Fig. 2 zu erkennen sind in dem kegelabschnittsförmigen Abschnitt der Umfangsfläche 3 die Schweißflächen 11 vorgesehen um somit nach dem Reibschweißen die Schaufeln 2 angebracht. An dem kegelförm i-gen Abschnitt schließt sich in einem Winkel α ein zylindrischer Abschnitt der Umfangfsfläche 3 des Trägers 1 an. Das erfindungsgemäße Verfahren läßt sich auch bei beliebig anders gestalteten Trägern 1 anwenden.

Für den Reibschweißvorgang wird der Träger 1 also in einer Lage befestigt, daß die Schweißfläche 11, an die eine Schaufel 2 geschweißt wird, in einer Ebene E liegt, die parallel zu einer Richtung L der linearen Oszillationsbewegung verläuft. Die zu beschaufelnde Schweißfläche 11 befindet sich dann in der sog. Schweißlage. Beim Reibschweißen der Schaufel 2 an den Träger 1 wird die Schweißfläche 6 der Scha u-fel 2 in Berührung mit der zugehörigen Schweißfläche 11 des Höckers 10 vom Träger 1 gebracht. Um die erforderliche Schweißtemperatur zu erzeugen, wird eine Stauchkraft senkrecht zu den Schweißflächen 6, 11 auf die Schaufel 2 und mithin die Schweißzone in der Ebene E aufgebracht und gleichzeitig die Schaufel 2 gegenüber dem Träger 1 zur Erzeugung von Reibungswärme schnell hin und her bewegt. Die erforderliche Schweißtemperatur beträgt im allgemeinen wenigstens 1000° C. S o-bald ausreichend Wärme erzeugt ist, wird die oszillierende Relativbewegung ausg e-setzt und die Stauchkraft beibehalten, bis die Schaufel 2 mit dem Träger 1 ve r-schweißt und integral verbunden ist. Je nach Anwendung könnte die Stauchkraft alternativ auch erhöht oder erniedrigt werden. Anschließend wird der Träger 1 fre i-gegeben und in eine Lage gedreht, in der die nächste Schaufel 2 angeschweißt we r-den kann. Diese Abfolge wird wiederholt, bis alle Schaufeln 2 an den Träger 1 g e-schweißt sind.

Bei einer Ausgestaltung des erfindungsgemäßen Verfahrens wird ein in Radialrichtung ober- und unterhalb an der Schweißebene E angrenzende Schweißzonenumgebung 12 in der sich an die Reib- und Stauchphase anschließenden Abkühlphase auf eine unterhalb der Schweißtemperatur liegende Temperatur erwärmt. Bei dieser Temperatur, die bevorzugt zwischen 250° C und 700° C liegt, tritt bei den für den Träger 1 und die Schaufel 2 verwendeten Werkstoffen ein Erweichen oder ein das Verschweißen bewirkender Metallfluß auf. Die Temperatur bewirkt jedoch, daß das Abkühlverhalten und insbesondere die Temperaturprofile nach dem Schweißvorgang kontrolliert werden und das Auftreten von Fehlstellen, insbesondere im Randbereich der Schweißzone, wirksam verringert bzw. weitgehend verhindert wird, so daß sich eine deutliche Verbesserung der Fügequalität erzielen läßt.

In der vorliegenden Ausgestaltung des Verfahrens erfolgt die Erwärmung durch ein Medium; und zwar aufgeheiztes Schutzgas S. Die Schweißzonenumgebung 12 wird durch das aufgeheizte Schutzgas auf 300° C aufgeheizt und der zu erwärmende Bereich über 5 min. nach Abschluß der Reib- und Stauchphase damit beaufschlagt. Je nach Anwendungsfall könnte das Medium alternativ auch eine Flüssigkeit sein. Die Zuführung des Schutzgases S ist am Träger 1 jeweils eine Schutzgasdusche 13 im Bereich der Schaufelvorderkante 7 und der Schaufelhinterkante 8 angeordnet. Die Schutzgasduschen 13 weisen jeweils eine kreisbogenförmig gekrümmte Gasaustrittsöffnung 14 auf, die sich über eine die Schaufelvorder- bzw. Schaufelhinterkante 7 bzw. 8 umfassende Bogenlänge an der Umfangsfläche 3 erstreckt. Die Gasaustrittsöffnungen 14 sind von der jeweiligen Schaufelkante 7 bzw. 8 in Richtung der Rotationsachse R beabstandet, wobei dieser Abstand a so zu wählen ist, daß die zu erwärmende Schweißzonenumgebung 12 von dem aufgeheizten Schutzgas S sicher bestrichen werden. Es hat sich gezeigt, daß die Fügequalität verbessert wird, wenn die Schweißfläche 6 der Schaufel 2 vor dem Schweißvorgang etwa 1 min. lang vo r-gewärmt wird.

Alternativ könnte sich die Schutzgasdusche 13 auch über eine größere Bogenlänge an der Umfangsfläche 3 des Trägers erstrecken, um so die Schweißzonenumgebung 12 nicht lediglich an den besonders kritischen Schaufelkanten 7 bzw. 8, sondern entlang dessen gesamten Umfang während der Abkühlphase zu erwärmen. Auch könnte lediglich auf einer Seite des Träger 1 eine Schutzgasdusche 13 angeordnet sein, wobei das Umströmen der Schweißzonenumgebung 12 durch eine diesen Bereich umschließende Hülle aus einer Folie od. dgl. gewährleistet sein könnte. In radialer Richtung ist die Anordnung der Gasaustrittsöffnung 14 der Schutzgasduschen 13 so zu wählen, daß die Schweißebene E bzw. die Schweißzonenumgebung 12 vollständig von der Strömung des aufgeheizten Schutzgases S erfaßt wird.

Die Erwärmung der Schweißzonenumgebung 12 zur Gewährleistung einer kontrollie r-ten Abkühlung könnte auch durch andere zusätzliche Wärmequellen erfolgen. Die Erwärmung beruht jedoch nicht darauf, daß die Schweißflächen 6 bzw. 11 gegenei n-ander gerieben werden. Als weitere zusätzliche Wärmequellen kommen daher bspw. eine induktive Erwärmung, eine Widerstandsbeheizung oder eine Erwärmung durch Strahlung in Betracht.

Bei einer weiteren Ausgestaltung des erfindungsgemäßen Verfahrens wird die Schweißfläche 6 der Schaufel 2 vor der Reib- und Stauchphase auf eine Temperatur von etwa 500° C erwärmt. Diese zusätzliche Energieeinbringung kann auch während des Schweißvorgangs fortgesetzt werden. Die Vorerwärmung erweist sich besonders bei aus unterschiedlichen Werkstoffen bestehenden Rotoren als vorteilhaft. Bei Verdichter- ebenso wie Turbinen-Blisks können der Träger 1 einerseits und die Scha u-feln 2 andererseits z.B. aus unterschiedlichen Nickelbasislegierungen bestehen. Wenn der Träger 1 bspw. aus einer Schmiedelegierung und die Schaufel 2 aus einer Gußlegierung besteht, liegen unterschiedliche Warmfestigkeiten in extremer Weise vor. Dadurch kommt es ohne die zusätzliche Erwärmung der Schweißfläche 6 der Schaufel 2, die ein Vorauseilen der Temperatur in Schaufel 2 bewirkt und u.a. die Größe des Stauchanteils steuert, zu äußerst geringen schaufelseitigen Stauchanteilen. Es besteht mithin die Gefahr, daß Verunreinigungen oder Gefügebestandteile nicht herausgerieben werden und die Fügequalität z.B. durch Fehlstellen in der Schweißzone herabgesetzt wird.

## Patentansprüche

1. Reibschweißverfahren zur Beschaufelung eines Rotors für eine Strömungsmaschine, bei dem an einer Umfangsfläche (3) eines Trägers (1) mehrere längliche Schweißflächen (11) vorgesehen werden, die jeweils mit einer Schweißfläche (6) einer Schaufel (2) unter Durchlaufen einer Reib- und Stauchphase verschweißt werden, wobei die Schweißtemperatur durch Zusammenpressen der Schweißflächen (6,11) und eine oszillierende Relativbewegung zwischen der Schaufel (2) und dem Träger (1) in der Schweißebene (E) erzeugt wird, **dadurch gekennzeichnet, dass** wenigstens die Schaufel (2) oder der Träger (1) im Bereich der Schweißfläche (6 bzw. 11) in dem Maße auf eine unterhalb der Schweißtemperatur liegende Temperatur zusätzlich erwärmt wird, dass an der Schaufel (2) und am Träger (1) ein ausreichender, definierter Stauchanteil erzielt wird, und dass die Erwärmung vor und/oder während sowie bedarfsweise noch nach der Reib- und Stauchphase erfolgt.

2. Reibschweißverfahren nach Anspruch 1, **dadurch gekennzeichnet, dass** wenigstens im Bereich der Schaufelvorderkante (7) und der Schaufelhinterkante (8) erwärmt wird.

3. Reibschweißverfahren nach Anspruch 1 oder 2, **dadurch gekennzeichnet, dass** die Schaufel (2) und der Träger (1) in der Schweißzonenumgebung (12) erwärmt werden.

4. Reibschweißverfahren nach Anspruch 3, **dadurch gekennzeichnet, dass** die Schweißzonenumgebung (12) um den gesamten Umfang herum erwärmt wird.

5. Reibschweißverfahren nach einem oder mehreren der vorhergehenden Ansprüche, **dadurch gekennzeichnet, dass** die Temperatur in der Abkühlphase nach Abschluß der Reib- und Stauchphase zwischen 4 bis 6 min. gehalten wird.

6. Reibschweißverfahren nach einem oder mehreren der vorhergehenden Ansprüche, **dadurch gekennzeichnet, dass** die Schweißfläche (6) der Schaufel (2) und der sich daran angrenzende Bereich der Schaufel (2) vor der Reib- und Stauchphase auf eine unterhalb der Schweißtemperatur liegende Temperatur vorerwärmt wird.

7. Reibschweißverfahren nach einem oder mehreren der vorhergehenden Ansprüche, **gekennzeichnet durch** eine Erwärmung auf eine Temperatur zwischen 250° C und 700° C.

8. Reibschweißverfahren nach einem oder mehreren der vorhergehenden Ansprüche, **gekennzeichnet durch** eine Erwärmung mit einer zusätzlichen externen Wärmequelle.

9. Reibschweißverfahren nach einem oder mehreren der vorhergehenden Ansprüche, **dadurch gekennzeichnet, dass** Schutzgas (S) aufgeheizt wird und den zu erwärmenden Bereich umströmt.

10. Reibschweißverfahren nach einem oder mehreren der Ansprüche 1 bis 9, **dadurch gekennzeichnet, dass** ein flüssiges Medium aufgeheizt wird und den zu erwärmenden Bereich umströmt.

11. Reibschweißverfahren nach einem oder mehreren der Ansprüche 1 bis 8, **gekennzeichnet durch** eine induktive Erwärmung.

12. Reibschweißverfahren nach einem oder mehreren der Ansprüchen 1 bis 8, **gekennzeichnet durch** eine Erwärmung mittels Strahlung.

13. Reibschweißverfahren nach einem oder mehreren der Ansprüche 1 bis 8, **gekennzeichnet durch** eine Erwärmung mittels Widerstandsbeheizung.

14. Reibschweißverfahren nach einem oder mehreren der vorhergehenden Ansprüche, daduch gekennzeichnet, dass die trägerseitigen Schweißflächen (11) jeweils an einem über die Umfangsfläche (3) des Trägers (1) vorstehenden Höcker (10) stirnseitig ausgebildet werden, und der Höcker (10) auf eine unterhalb der Schweißtemperatur liegende Temperatur erwärmt wird.

## Claims

1. Method of friction welding for mounting a blades on a rotor for a fan, pump or compressor, in which a plurality of oblong welding surfaces (11) are provided on a peripheral face (3) of a mount (1) and are welded respectively to a welding surface (6) of a blade (2) by running a friction and compression phase, the welding temperature being generated by pressing the welding surfaces (6, 11) together and by an oscillating relative motion between the blade (2) and the mount (1) in the welding plane (E), **characterised in that** at least the blade (2) or the mount (1) is additionally heated in the region of the welding surface (6 or 11) to a temperature below the welding temperature to the degree that an appropriate, defined compression factor is achieved on the blade (2) and on the mount (1), the heat being applied prior to and/or during the friction and compression phase and afterwards if necessary.

2. Friction welding method as claimed in claim 1, **characterised in that** at least the region of the blade leading edge (7) and the blade trailing edge (8) is heated.

3. Friction welding method as claimed in claim 1 or 2, **characterised in that** the blade (2) and the mount (1) are heated in the area around the welding zone (12).

4. Friction welding method as claimed in claim 3, **characterised in that** the area around the welding zone (12) is heated around the entire periphery.

5. Friction welding method as claimed in one or more of the preceding claims, **characterised in that** the temperature is maintained for between 4 and 6 min. in the cooling phase after completing the friction and compression phase.

6. Friction welding method as claimed in one or more of the preceding claims, **characterised in that** the welding surface (6) of the blade (2) and the adjoining region of the blade (2) are pre-heated to a temperature below the welding temperature prior to the friction and compression phase.

7. Friction welding method as claimed in one or more of the preceding claims, **characterised by** heating up to a temperature of between 250°C and 700°C.

8. Friction welding method as claimed in one or more of the preceding claims, **characterised by** applying heat using an additional external heat source.

9. Friction welding method as claimed in one or more of the preceding claims, **characterised in that** protective gas (S) is heated and circulated around the region to be heated.

10. Friction welding method as claimed in one or more of claims 1 to 9, **characterised in that** a liquid medium is heated and circulated in the region to be heated.

11. Friction welding method as claimed in one or more of claims 1 to 8, **characterised in that** heating is by induction.

12. Friction welding method as claimed in one or more of claims 1 to 8, **characterised in that** heating is heating by irradiation.

13. Friction welding method as claimed in one or more of claims 1 to 8, **characterised in that** heating is by resistance heating.

14. Friction welding method as claimed in one or more of the preceding claims, **characterised in that** the mount-side welding surfaces (11) are formed by respective end-face protuberances (10) projecting out from the peripheral surface (3) of the mount (1) and the protuberance (10) is heated to a temperature below the welding temperature.

## Revendications

1. Procédé de soudage par friction pour l'ailettage d'un rotor pour une turbomachine, pour lequel, sur une face périphérique (3) d'un support (1), sont prévues une pluralité de faces de soudage (11) allongées, qui sont chacune soudées à une face de soudage (6) d'une aube (2), en effectuant une. phase de friction et d'écrasement, la température de soudage étant produite par compression des faces de soudage (6, 11) et un mouvement relatif oscillant entre les aubes (2) et le support (1) dans le plan de soudage (E), **caractérisé en ce qu'**au moins l'aube (2) ou le support (1) est chauffé dans la zone de la face de soudage (6, respectivement 11), à une température inférieure à la température de soudage, à un degré tel que, sur l'aube (2) et sur le support (1), soit obtenu un degré d'écrasement défini, suffisant, et que l'échauffement s'effectue avant et/ou pendant, ainsi que, en cas de besoin, encore après la phase de friction et d'écrasement.

2. Procédé de soudage par friction selon la revendication 1, **caractérisé en ce qu'**on effectue un chauffage, au moins dans la zone de l'arête avant (bord d'attaque) (7) de l'aube et de l'arête arrière (bord de fuite) (8) de l'aube.

3. Procédé de soudage par friction selon la revendication 1 ou 2, **caractérisé en ce que** l'aube (2) et le support (1) sont chauffés dans l'environnement de la zone de soudage (12).

4. Procédé de soudage par friction selon la revendication 3, **caractérisé en ce que** l'environnement (12) de la zone de soudage est chauffé sur la totalité de la périphérie.

5. Procédé de soudage par friction selon l'une ou plusieurs des revendications précédentes, **caractérisé en ce que** la température dans la phase de refroidissement, après achèvement de la phase de friction et d'écrasement, est maintenue, pendant une durée de 4 à 6 min.

6. Procédé de soudage par friction selon l'une ou plusieurs des revendications précédentes, **caractérisé en ce que** la face de soudage (6) de l'aube (2) et la zone, y étant limitrophe, de l'aube (2) sont préchauffées, avant la phase de friction et d'écrasement, à une température inférieure à la température de soudage.

7. Procédé de soudage par friction selon l'une ou plusieurs des revendications précédentes, **caractérisé par** un chauffage, effectué à une température comprise entre 250° C et 700° C.

8. Procédé de soudage par friction selon l'une ou plusieurs des revendications précédentes, **caractérisé par** un chauffage, effectué avec une source de chaleur externe supplémentaire.

9. Procédé de soudage par friction selon l'une ou plusieurs des revendications précédentes, **caractérisé en ce qu'**un gaz protecteur (S) est chauffé et est mis en écoulement, autour de la zone à chauffer.

10. Procédé de soudage par friction selon l'une ou plusieurs des revendications1 à 9, **caractérisé en ce qu'**un fluide liquide est chauffé et mis en écoulement autour de la zone à chauffer.

11. Procédé de soudage par friction selon l'une ou plusieurs des revendications 1 à 8, **caractérisé par** un chauffage inductif.

12. Procédé de soudage par friction selon l'une ou plusieurs des revendications 1 à 8, **caractérisé par** un chauffage par rayonnement.

13. Procédé de soudage par friction selon l'une ou plusieurs des revendications 1 à 8, **caractérisé par** un chauffage effectué par échauffement par résistance.

14. Procédé de soudage par friction selon l'une ou plusieurs des revendications précédentes, **caractérisé en ce que** les faces de soudage (11), situées côté support, sont réalisées chacune frontalement sur un bossage (10) en saillie sur la face périphérique (3) du support (1), et le bossage (10) est chauffé à une température inférieure à la température de soudage.
